# EUROPEAN PATENT SPECIFICATION

(11) **EP 2 796 057 B1**
(45) Date of publication and mention of the grant of the patent: **21.02.2018**
(21) Application number: 12860445.1
(22) Date of filing: 21.12.2012
(51) Int. Cl.: A23L 3/36, A23L 7/109, A23L 7/113

(54) **METHOD FOR PRODUCING COOKED AND FROZEN PASTA**
VERFAHREN ZUR HERSTELLUNG GEKOCHTER UND GEFRORENER TEIGWAREN
PROCÉDÉ DE PRODUCTION DE PÂTES CUITES ET CONGELÉES

(30) Priority: 22.12.2011 JP 2011281089; 16.03.2012 CN 201210069985
(43) Date of publication of application: 29.10.2014
(73) Proprietor: Nisshin Foods Inc., Tokyo 101-8441 (JP)
(72) Inventor: IRIE, Kentarou, Fujimino-shi Saitama 356-8511 (JP); KOIZUMI, Norio, Fujimino-shi Saitama 356-8511 (JP); NAKANISHI, Yumiko, Fujimino-shi Saitama 356-8511 (JP); SUGA, Youhei, Fujimino-shi Saitama 356-8511 (JP); MAEDA, Tatsurou, Tokyo 103-8544 (JP)
(74) Representative: Blodig, Wolfgang
(86) International application number: PCT/JP2012/083208
(87) International publication number: WO 2013/094724

(56) References cited:
- EP-A1- 2 774 491
- EP-A1- 2 862 452
- JP-A- H0 970 272
- JP-A- H1 128 066
- JP-A- S61 141 855
- JP-A- 2001 346 533

## Description

### [Technical Field]

The present invention relates to a method for producing cooked and frozen pastas. In more detail, the present invention relates to a method for producing cooked and frozen pastas which can be stored for a long time in a state such that the pastas is cooked by boiling fresh pasta noodles, followed by freezing, and which retain good appearance and texture comparable to freshly boiled fresh pasta even after being thawed.

### [Background Art]

Fresh pastas are popular foods because, unlike dried pastas, they attain a unique chewy and resilient *(mochimochi)* texture after they are boiled. However, because fresh pastas have poor storage stability due to high water content, processes such as kneading, and rolling out of dough must be performed before each serving. Thus, fresh pastas are a food requiring complex preparation before serving. Although fresh pastas in a chilled or frozen state are commercially available, chilled products can be distributed only through limited marketing channels due to the infeasibility of prolonged storage. Meanwhile, there is a problem that even if fresh pastas which have been cooked or not are frozen-stored, the noodle surface of the pasta presents a rough appearance, and resilience (*koshi*) and viscoelasticity are lost, resulting in failure of maintenance of their good texture before frozen-storage. Further, there is a problem that because the noodle surface of boiled fresh pasta becomes rough during frozen-storage, when pasta is frozen with sauce on top, the sauce penetrates into the pasta during storage, causing deterioration in the quality.

Fresh pastas which can be stored for a long time have already been proposed before. For example, Patent Literature 1 describes a method for producing quickly-rehydratable fresh pastas having storage stability, comprising drying dough, which has been extruded at a specific pressure under specific vacuum conditions, to certain water content, and then sealing and sterilizing the dough. However, because the above fresh pastas have been subjected to a drying process, they have a similar texture to that of boiled dried pasta, failing in providing a satisfactory unique chewy and resilient *(mochimochi)* texture required for fresh pastas.

Patent Literature 2 describes a method, comprising frozen-storing semi-fresh pastas, which have been boiled and cooked, and cooking the pastas with water in a microwave oven before serving. However, because pastas provided by the above cooking method are semi-cooked pasta prepared by boiling dried pasta, they have a completely different texture from so-called boiled fresh pasta prepared by boiling fresh pasta.

Patent Literature 3 describes a method for producing fresh noodles with excellent storage stability, comprising kneading wheat flour or wheat semolina, activated gluten powder and/or egg white with water, and then subjecting the resulting mixture to extrusion under reduced pressure. However, although the resulting fresh noodles had a good appearance, they were unsatisfactory in terms of storage stability.

Patent Literature 4 describes pasta, characterized by subjecting dough, which has been kneaded under reduced pressure and then extrusion into chips, to further kneading and extrusion. However, because this pasta was intended to provide less stickiness and excellent smoothness and hardness with adequate elasticity by diversifying the direction of the gluten network of the dough, two extrusion steps were necessary, resulting in the pasta having a very hard texture and lacking a chewy and resilient (*mochimochi*) texture.

JP 2001 346533 A describes that a dough is kneaded at reduced pressure and extruded into chips, and the resultant chip is kneaded and extruded again to obtain pasta with good texture. JP H11 28066 A describes production of miscellaneous noodles. EP 2 862 452 A1 (not pre-published) describes a fresh pasta and method for manufacturing frozen pasta.

In light of the above, in a practical situation, there is a demand for cooked pastas which can be stored in a frozen state for a long time, while maintaining a unique chewy and resilient (*mochimochi*) texture of boiled fresh pasta even after frozen-storage.

### [Citation List]

### [Patent Literature]

[Patent Literature 1] JP-B-S63-32424
[Patent Literature 2] JP-A-H10-295302
[Patent Literature 3] JP-A-2001-245617
[Patent Literature 4] JP-A-2001-346533

### [Summary of Invention]

### [Technical Problem]

In light of the practical situation described above, an object of the present invention is to provide cooked and frozen pastas which can be stored in a frozen state for a long time and which retain good appearance and texture comparable to freshly boiled fresh pastas even after being thawed.

### [Solution to Problem]

The present inventors conducted various studies to achieve the aforementioned object. As a result, they found that cooked and frozen pastas, which were produced by boiling fresh pasta obtained by extruding dough into pasta noodles at a specific pressure and then freezing the pastas, are highly resistant to freezing, and thus can be stored in a frozen state for a long time while presenting good appearance and texture comparable to freshly boiled fresh pasta after being thawed, thereby completing the present invention.

That is, the present invention achieved the aforementioned object by a method for producing cooked and frozen fresh pastas, comprising boiling fresh pastas obtained by extruding dough into pasta noodles at a pressure of from 80 kgf/cm² to 200 kgf/cm² (7.85 MPa to 19.6 MPa), and then freezing the pastas, as defined in claim 1.

### [Advantageous Effects of Invention]

The cooked and frozen pastas obtained by the production method of the present invention are highly resistant to freezing, can be stored in a frozen state for a long time while maintaining the smooth appearance of the pasta noodles and can retain good appearance and texture after being thawed as obtained when conventional fresh pastas are consumed immediately after being boiled. Moreover, since the cooked and frozen pastas obtained by the production method of the present invention can maintain the smooth appearance of the pasta noodles even when they are frozen, when the pastas are frozen-stored with sauce on top, deterioration of quality caused by the penetration of sauce into pasta during storage can be prevented.

### [Description of Embodiments]

In general, fresh pastas are produced by rolling out noodle dough while applying pressure and cutting the resulting dough into noodles or by extruding noodle dough to make noodles while applying pressure in accordance with various noodle production methods such as rolling, rolling, and extruding. However, in either case, noodle production was not carried out under high pressure because there was no need to dry noodles according to conventional production methods of fresh pastas, and moreover, in order to preserve the moderately hard and chewy and resilient (*mochimochi*) texture of noodles. According to conventional production methods of fresh pastas, pressure applied to noodle dough during noodle production is approximately 0 kgf/cm² in the case of rolling, and it is approximately 20 kgf/cm² even in the case of extrusion.

However, the method for producing cooked and frozen pastas according to the present invention is characterized by preparing fresh pastas by applying, to dough, unusually high pressure as a pressure to be applied to fresh pastas. According to the present method, dough is extruded into noodles at a pressure of from 80 kgf/cm² to 200 kgf/cm² (7.85 MPa to 19.6 MPa). The extrusion pressure used in the method of the present invention is equal to or higher than the extrusion pressure normally used in the production of dried pasta (approximately from 70 to 160 kgf/cm² (6.86 MPa to 15.7 MPa)), and is extremely high as a pressure to be applied to fresh pastas.

Dough for fresh pastas used in the production method of the present invention is noodle dough obtained by adding kneading water to a flour ingredient containing durum wheat flour

As the aforementioned wheat flour, a mixture of durum wheat flour and regular wheat flour other than durum wheat flour is used since the chewy and resilient *(mochimochi)* texture of the pasta obtained can be improved compared to that obtained by use of durum wheat flour alone. Examples of the regular wheat flour include hard wheat flour, semi-hard wheat flour, moderate wheat flour, soft flour, and a mixture of these flours, among which moderate wheat flour is preferable.

Alternatively, in addition to the aforementioned durum wheat flour, starch or processed starch is blended in the aforementioned flour ingredient of dough of fresh pastas since the texture of the pasta obtained can be further improved. The starch is tapioca starch, potato starch, corn starch, waxy corn starch, or processed starch. Examples of the processed starch include one obtained by subjecting starch to processing such as acetylation, hydroxypropylation, etherification, crosslinking, oxidation and pregelatinization or physical treatment. The aforementioned starches and processed starches can be used singly or in combinations of two or more thereof. Among the aforementioned starches and processed starches, hydroxypropylated starch is preferable since it improves the chewy and resilient *(mochimochi)* texture of pasta.

The aforementioned flour ingredient of dough of fresh pastas contains durum wheat flour and at least one selected from the group consisting of starch as defined above, processed starch and regular wheat flour. The flour ingredient preferably contains durum wheat flour, regular wheat flour, and at least one selected from the group consisting of starch as defined above and processed starch. The blending ratio of durum wheat flour to at least one selected from the group consisting of starch as defined above, processed starch and regular wheat flour in the flour ingredient is from 30 : 70 to 95 : 5, preferably from 60 : 40 to 90 : 10.

In addition to the aforementioned wheat flour, starches, and processed starch, other ingredients normally used for the production of fresh pastas such as sugars, gluten, eggs, salt, oil and fat, emulsifiers, and thickeners can be added to the aforementioned flour ingredient. The amount of these other ingredients added may be from 0 to 30 parts by mass relative to 100 parts by mass of the aforementioned wheat flour, starches and processed starch.

As the kneading water used for the production of dough, any kind of water used for routine noodle production such as of water, salt water, and lye water can be used. Considering that the dough obtained is subjected to such a high extrusion pressure as described above, the amount of kneading water added is preferably from 15 to 35 parts by mass, more preferably from 18 to 35 parts by mass, even more preferably from 20 to 30 parts by mass, and still more preferably from 24 to 27 parts by mass relative to 100 parts by mass of the flour ingredient. When the amount of kneading water added is less than 15 parts by mass, the extruded noodle strands become fragile and easily fragmented. On the other hand, when the amount of kneading water added exceeds 35 parts by mass, the dough becomes weak and susceptible to damage, resulting in failure of the fresh pastas thus obtained to achieve the desired appearance or texture.

According to the production method of the present invention, fresh pastas are obtained by preparing noodles using the aforementioned dough under high pressure. That is, according to the production method of the present invention, fresh pastas may be prepared by extruding the above dough into noodles at a pressure of from 80 kgf/cm² to 200 kgf/cm², preferably from 120 to 160 kgf/cm². The degree of pressure reduction during extrusion may be from -200 mmHg to vacuum, preferably from -600 mmHg to vacuum. The extrusion can be carried out by using, for example, an extrusion noodle making machine used for the production of dried pasta. According to the present method, in the preparation process of the fresh pastas, noodles may be prepared by extruding dough which has been obtained by kneading ingredients; therefore, the kneading step and the noodle preparation-by-extrusion step may each be performed once. According to the present method, in the preparation process of the fresh pastas, the kneading step and the noodle preparation-by-extrusion step need not be performed twice or more, meaning that the dough made into noodles needs not be kneaded again or subjected to another noodle preparation process.

In the present invention, the shape of the fresh pastas is not particularly limited, and after extruding noodle dough into noodle sheets, they can be made into the desired shape such as noodle strands by, for example, rolling, cutting and the like in accordance with a routine method. Alternatively, pastas having the desired shape can be made by extrusion through a die having openings of appropriate shape.

Subsequently, the fresh pastas thus obtained are directly boiled without being subjected to a drying step, etc. Boiling can be performed by a regular boiling method used for fresh pasta. In general, fresh pastas are cooked in boiling water for two to eight minutes. After optionally draining hot water and cooling the boiled pastas, they are subjected to a freezing process.

For the freezing process in the production method of the present invention, a freezing process routinely performed on noodles can be adopted. For example, it is preferable that the pastas boiled as described above be divided into certain portions, for example, 150 to 300 g for one person, and served on trays, etc., and then subjected to freezing process. For the freezing process, either quick freezing or slow freezing may be feasible; however, quick freezing is preferable. Once the pastas are frozen by quick freezing, they can be stored under normal frozen-storage conditions.

In the aforementioned freezing process, the boiled pastas may be frozen with sauce. For example, sauce may be poured on top of the boiled pastas divided into trays as described above and the same is frozen, or sauce may be mixed with the boiled pastas and the same is served on trays and then frozen. As the sauce, any regular pasta sauce may be used, and examples thereof include a tomato-based sauce such as meat sauce, Neapolitan sauce, and arrabbiata sauce, a white sauce such as carbonara sauce, and a brown sauce; however, the sauce is not limited to these examples.

The cooked and frozen pastas produced in accordance with the production method of the present invention have improved resistance to freezing compared to conventional frozen product of fresh pastas or boiled fresh pastas, and can maintain the smooth noodle surface even when they are frozen. Accordingly, these cooked and frozen pastas present a smooth appearance and a favorable texture comparable to those obtained with freshly boiled fresh pastas even after being thawed or re-heated. Also, since cooked and frozen pastas produced in accordance with the production method of the present invention maintain a smooth surface even when they are frozen, deterioration of the quality of texture or appearance of the pastas caused by excessive penetration of sauce into pastas is prevented, even when they are frozen-stored with sauce.

### [Examples]

Hereinbelow, the present invention will be further described in detail with reference to Examples. However, the present invention is not limited to these Examples.

Production Examples 1 to 16 are comparative examples.

### Production Examples 1 to 8

Durum wheat semolina flour (Leone G: the product of Nisshin Flour Milling Inc.) (100 parts by mass) and water (26 parts by mass) were mixed and then kneaded to prepare noodle dough. Under a reduced pressure condition of -600 mmHg, the dough was extruded into noodles by a pasta making machine under each of the following pressure conditions of 30, 70, 80, 120, 160, 200, 210 and 250 kgf/cm², whereby eight kinds of fresh spaghetti (1.8 mm in diameter) were obtained.

The fresh spaghetti thus obtained was boiled in hot water for five minutes and then cooled with water, whereby boiled spaghetti was produced.

The boiled spaghetti was dividedly served on trays (160 mm × 120 mm; made of polypropylene) at 180 g per tray, and further, for half of the trays, 100 g of commercially available canned meat sauce (the product of Nisshin Foods Inc.) was poured on top of the noodle mass. The resulting spaghetti was quickly frozen at -35°C, whereby the cooked and frozen spaghetti of Production Examples 1 to 8 (each with and without sauce) were produced.

### Test Example 1

The cooked and frozen spaghetti of Production Examples 1 to 8 was removed from the trays, packed in polypropylene bags, and then stored at -18°C. After one week, the frozen spaghetti was removed from the bags and then thawed by heating in a microwave oven (600 W). Spaghetti without sauce was heated for three minutes, whereas spaghetti with sauce was heated for 4 minutes and 30 seconds. The appearance and texture of the spaghetti after being thawed were evaluated. The spaghetti with sauce was lightly mixed after heating and the appearance and texture of the spaghetti with sauce were evaluated. Evaluation was conducted by 10 panelists based on the evaluation criteria shown in Table 1, and average scores were obtained. The results are shown in Table 2.

**[Table 1]**

| | | |
|---|---|---|
| Appearance of spaghetti | 5 | Very smooth noodle surface, appearing to have a smooth texture. |
| | 4 | Fairly smooth noodle surface, appearing to have a slightly smooth texture. |
| | 3 | The noodle surface is relatively smooth without roughness. |
| | 2 | The noodle surface is slightly coarse and rough, or slightly melted. |
| | 1 | The noodle surface is coarse and rough, or melted. |
| Texture of spaghetti | 5 | Excellent texture with sufficient unique resilience (*koshi*) and elasticity of fresh spaghetti. |
| | 4 | Good texture with unique resilience (*koshi*) and elasticity of fresh spaghetti. |
| | 3 | Acceptable texture relatively having resilience (*koshi*) and elasticity. |
| | 2 | Slightly too soft or slightly too hard, lacking the unique texture of fresh spaghetti. |
| | 1 | Too soft or too hard, lacking the unique texture of fresh spaghetti. |
| Appearance of spaghetti with sauce | 5 | Sauce excellently and evenly clings to noodles. |
| | 4 | Sauce clings to noodles well. |
| | 3 | Sauce moderately clings to noodles. |
| | 2 | Sauce poorly or unevenly clings to noodles. |
| | 1 | Sauce very poorly and unevenly clings to noodles. |
| Texture of spaghetti with sauce | 5 | Excellent texture with sufficient resilience (*koshi*) and elasticity, harmonized well with sauce. |
| | 4 | Good texture with resilience (*koshi*) and elasticity along with sauce. |
| | 3 | Average texture relatively having resilience (*koshi*) and elasticity. |
| | 2 | Slightly too soft or slightly too hard, somewhat poor texture with noodles absorbing a small amount of sauce. |
| | 1 | Too soft or hard, poor texture with noodles absorbing a large amount of sauce. |

**[Table 2]**

| | Production Example 1 | Production Example 2 | Production Example 3 | Production Example 4 | Production Example 5 | Production Example 6 | Production Example 7 | Production Example 8 |
|---|---|---|---|---|---|---|---|---|
| Extrusion pressure in kgf/cm² (MPa) | 30 (2.94) | 70 (6.86) | 80 (7.85) | 120 (11.77) | 160 (15.69) | 200 (19.6) | 210 (20.6) | 250 (24.5) |
| Appearance of spaghetti | 1.5 | 2.8 | 3.9 | 4.8 | 4.5 | 4.5 | 4.3 | 4.3 |
| Texture of spaghetti | 2.4 | 3.4 | 3.7 | 4.7 | 4.6 | 4.0 | 3.2 | 2.5 |
| Appearance of spaghetti with sauce | 2.3 | 3.3 | 4.0 | 4.5 | 4.4 | 4.0 | 3.5 | 2.8 |
| Texture of spaghetti with sauce | 1.8 | 2.5 | 3.7 | 4.1 | 4.0 | 3.2 | 2.5 | 2.1 |

### Production Examples 9 to 16

Except for adding water in amounts shown in Table 3 to 100 parts by mass of durum wheat semolina flour (Leone G: Nisshin Flour Milling Inc.), the cooked and frozen spaghetti of Production Examples 9 to 16 (each with and without sauce) were produced by the same procedure as in Production Example 5 (noodle extrusion pressure: 160 kgf /cm²).

Using the cooked and frozen spaghetti of Production Examples 9 to 16, the appearance and texture of the spaghetti or spaghetti with sauce after being thawed were evaluated by the same procedure as in Test Example 1. The results are shown in Table 3.

**[Table 3]**

| | Production Example 9 | Production Example 10 | Production Example 11 | Production Example 12 | Production Example 13 | Production Example 14 | Production Example 15 | Production Example 16 |
|---|---|---|---|---|---|---|---|---|
| Water (parts by mass) | 15 | 18 | 20 | 24 | 27 | 30 | 35 | 37 |
| Appearance of spaghetti | 3.2 | 3.7 | 3.8 | 4.2 | 4.5 | 4.6 | 4.5 | 4.4 |
| Texture of spaghetti | 3.3 | 3.5 | 3.6 | 4.0 | 4.6 | 4.1 | 3.7 | 2.3 |
| Appearance of spaghetti with sauce | 3.2 | 3.7 | 3.7 | 4.1 | 4.4 | 4.1 | 3.9 | 2.8 |
| Texture of spaghetti with sauce | 3.6 | 3.7 | 3.7 | 3.8 | 4.0 | 3.9 | 3.6 | 2.7 |

### Production Examples 17 to 23

Except for adding durum wheat semolina flour (Leone G: Nisshin Flour Milling Inc.) and hydroxypropylated starch (Yuri: the product of Matsutani Chemical Industry Co., Ltd.) in amounts shown in Table 4, the cooked and frozen spaghetti of Production Examples 17 to 23 (each with and without sauce) were produced by the same procedure as in Production Example 11 (addition of water: 20 parts by mass, noodle extrusion pressure: 160 kgf/cm²).

Using the cooked and frozen spaghetti of Production Examples 17 to 23, the appearance and texture of the spaghetti or spaghetti with sauce after being thawed were evaluated by the same procedure as in Test Example 1. The results are shown in Table 4. Also, the results of Production Example 11 are shown again in Table 4.

**[Table 4]**

| | Production Example 17 | Production Example 18 | Production Example 19 | Production Example 20 | Production Example 21 | Production Example 22 | Production Example 23 | Production Example 11 |
|---|---|---|---|---|---|---|---|---|
| Durum semolina flour (parts by mass) | 20 | 30 | 40 | 60 | 80 | 90 | 95 | 100 |
| Hydroxypropylated starch (parts by mass) | 80 | 70 | 60 | 40 | 20 | 10 | 5 | 0 |
| Appearance of spaghetti | 3.0 | 3.8 | 3.9 | 4.2 | 4.5 | 4.6 | 4.2 | 3.8 |
| Texture of spaghetti | 3.2 | 4.1 | 4.2 | 4.6 | 4.9 | 4.7 | 4.2 | 3.6 |
| Appearance of spaghetti with sauce | 2.7 | 3.8 | 3.9 | 4.1 | 4.4 | 4.1 | 4.0 | 3.7 |
| Texture of spaghetti with sauce | 2.8 | 4.1 | 4.3 | 4.6 | 4.8 | 4.7 | 4.3 | 3.7 |

### Production Examples 24 to 30

Except for adding durum wheat semolina (Leone G: Nisshin Flour Milling Inc.), hydroxypropylated starch (Yuri: the product of Matsutani Chemical Industry Co., Ltd.), and regular wheat flour (Shirotsubaki: a moderate wheat flour produced by Nisshin Flour Milling Inc.) in amounts shown in Table 5, the cooked and frozen spaghetti of Production Examples 24 to 30 (each with and without sauce) were produced by the same procedure as in Production Example 11 (addition of water: 20 parts by mass, noodle extrusion pressure: 160 kgf/cm²).

Using the cooked and frozen spaghetti of Production Examples 24 to 30, the appearance and texture of the spaghetti or spaghetti with sauce after being thawed were evaluated by the same procedure as in Test Example 1. The results are shown in Table 5. Also, the results of Production Example 11 are shown again in Table 5.

**[Table 5]**

| | Production Example 24 | Production Example 25 | Production Example 26 | Production Example 27 | Production Example 28 | Production Example 29 | Production Example 30 | Production Example 11 |
|---|---|---|---|---|---|---|---|---|
| Durum semolina flour (parts by mass) | 20 | 30 | 40 | 60 | 80 | 90 | 95 | 100 |
| Hydroxypropylated starch (parts by mass) | 0 | 0 | 0 | 20 | 10 | 5 | 0 | 0 |
| Regular wheat flour (parts by mass) | 80 | 70 | 60 | 20 | 10 | 5 | 5 | 0 |
| Appearance of spaghetti | 2.9 | 3.8 | 3.9 | 4.2 | 4.5 | 4.6 | 4.2 | 3.8 |
| Texture of spaghetti | 3.0 | 3.9 | 4.0 | 4.9 | 4.8 | 4.8 | 3.9 | 3.6 |
| Appearance of spaghetti with sauce | 2.7 | 3.8 | 3.8 | 4.0 | 4.4 | 4.1 | 4.0 | 3.7 |
| Texture of spaghetti with sauce | 2.7 | 3.8 | 4.0 | 4.9 | 4.8 | 4.7 | 3.9 | 3.7 |

### Production Example 31

Durum wheat semolina flour (Leone G: Nisshin Flour Milling Inc.) (100 parts by mass) and water (26 parts by mass) were mixed and then kneaded to prepare noodle dough. Under a reduced pressure condition of -600 mmHg, the resulting dough was extruded into spaghetti once (1.8 mm in diameter) using a pasta making machine. Subsequently, the resulting spaghetti was cut into chips which are 15 mm in length, kneaded again, then put in the pasta making machine, and extruded under a pressure condition of 120 kgf/cm², whereby the fresh spaghetti (1.8 mm in diameter) of Production Example 31 was obtained. The fresh spaghetti thus obtained was boiled in a similar manner to Production Example 4, whereby cooked and frozen spaghetti (with and without sauce) was produced.

Using the cooked and frozen spaghetti of Production Example 31, the appearance and texture of the spaghetti or spaghetti with sauce after being thawed were evaluated by the same procedure as in Test Example 1. The results are shown in Table 6. Also, the results of Production Example 4 are shown again in Table 6. The spaghetti of Production Example 31, which was produced from twice-kneaded dough, was very hard without elasticity, failing in achieving a unique texture of fresh spaghetti.

**[Table 6]**

| | Production Example 4 | Production Example 31 |
|---|---|---|
| Number of extrusion | 1 | 2 |
| Appearance of spaghetti | 4.8 | 3.9 |
| Texture of spaghetti | 4.7 | 2.5 |
| Appearance of spaghetti with sauce | 4.5 | 3.8 |
| Texture of spaghetti with sauce | 4.7 | 2.6 |

## Claims

1. A method for producing cooked and frozen pastas, comprising boiling fresh pastas obtained by extruding dough into pasta noodles at a pressure of from 80 kgf/cm² to 200 kgf/cm² (7.85 MPa to 19.6 MPa), and then freezing the pastas,
wherein the dough is obtained by adding kneading water to a flour ingredient, followed by kneading,
wherein the flour ingredient comprises durum wheat flour and at least one selected from the group consisting of tapioca starch, potato starch, corn starch, waxy corn starch, processed starch, and regular wheat flour other than durum wheat flour at a blending ratio of from 30 : 70 to 95 : 5.

2. The method according to claim 1, wherein the dough is obtained by adding from 18 to 35 parts by mass of kneading water to 100 parts by mass of a flour ingredient, followed by kneading.

3. The method according to claim 1 or 2, wherein the extrusion is performed at -200 mmHg to under vacuum.

4. The method according to any one of claims 1 to 3, wherein the boiled pastas are frozen with sauce.

## Patentansprüche

1. Verfahren zur Herstellung von gekochten und gefrorenen Teigwaren, umfassend das Kochen von frischen Teigwaren, die durch Extrudieren von Teig zu Teigwarennudeln bei einem Druck von 80 kgf/m² bis 200 kgf / cm² (7.85 MPa bis 19.6 MPa) erhalten werden, und anschließendes Einfrieren der Teigwaren, wobei der Teig erhalten wird durch Zugabe von Knetwasser zu einem Mehlbestandteil, gefolgt von Kneten, wobei der Mehlbestandteil Hartweizenmehl und mindestens eines ausgewählt aus der Gruppe bestehend aus Tapioka-Stärke, Kartoffelstärke, Maisstärke, Wachsmaisstärke, verarbeiteter Stärke und regulärem Weizenmehl außer Hartweizenmehl in einem Mischungsverhältnis von 30 : 70 bis 95 : 5 umfasst.

2. Verfahren nach Anspruch 1, wobei der Teig erhalten wird durch Zugabe von 18 bis 35 Massenteilen an Knetwasser zu 100 Massenteilen eines Mehlbestandteils, gefolgt von Kneten.

3. Verfahren nach Anspruch 1 oder 2, wobei die Extrusion bei -200 mmHg bis unter Vakuum durchgeführt wird.

4. Verfahren nach einem der Ansprüche 1 bis 4, wobei die gekochten Teigwaren mit Soße gefroren werden.

## Revendications

1. Procédé de production de pâtes cuites et congelées, comprenant la cuisson de pâtes fraîches obtenues par extrusion d'une pâte pour former des nouilles à une pression de 80 kgf/cm² à 200 kgf/cm² (7,85 MPa à 19,6 MPa), puis la congélation des pâtes,
la pâte étant obtenue par adjonction d'eau de pétrissage à un ingrédient de farine, suivie du pétrissage,
l'ingrédient de farine comprenant de la semoule de blé dur et l'un au moins des éléments sélectionnés dans le groupe constitué par la fécule de manioc, la fécule de pomme de terre, la fécule de maïs, la fécule de maïs visqueux, la fécule traitée et de la farine de froment courante autre que la semoule de blé dur, suivant un rapport de mélange de 30:70 à 95:5.

2. Procédé selon la revendication 1, selon lequel la pâte est obtenue par adjonction de 18 à 35 parties en masse d'eau de pétrissage à 100 parties en masse d'un ingrédient de farine, suivie du pétrissage.

3. Procédé selon la revendication 1 ou 2, selon lequel l'extrusion est réalisée à -200 mmHg jusqu'au vide.

4. Procédé selon l'une quelconque des revendications 1 à 3, selon lequel les pâtes cuites sont congelées avec de la sauce.
